# EUROPÄISCHE PATENTSCHRIFT

(11) **EP 1 245 877 B1**
(45) Veröffentlichungstag und Bekanntmachung des Hinweises auf die Patenterteilung: **24.11.2004**
(21) Anmeldenummer: 02004433.5
(22) Anmeldetag: 26.02.2002
(51) Int. Cl.: F16J 15/34, F16J 15/16

(54) **Gleitring-Dichtungsanordnung**
Mechanical seal arrangement
Dispositif d'étanchéité mécanique

(30) Priorität: 29.03.2001 DE 20105507 U
(43) Veröffentlichungstag der Anmeldung: 02.10.2002
(73) Patentinhaber: Burgmann Dichtungswerke GmbH & Co. KG, 82515 Wolfratshausen (DE)
(72) Erfinder: Dechow, Frank, 67551 Worms (DE); Portenlänger, Josef, 82544 Egling (DE); Totzauer, Peter, 82538 Geretsried (DE)
(74) Vertreter: Schmidt, Horst, Dr.

(56) Entgegenhaltungen:
- EP-A- 0 981 000
- DE-A- 1 525 535
- DE-A- 2 556 601
- US-A- 4 418 919
- US-B1- 6 193 409

## Beschreibung

Die Erfindung betrifft eine Gleitring-Dichtungsanordnung gemäss dem Oberbegriff des Patentanspruches 1.

Sie betrifft insbesondere eine Gleitring-Dichtungsanordnung, so wie sie beispielsweise aus dem Dokument US-A-4 418 919 bekannt ist, mit Mitteln zur Einführung eines flüssigen Spülmediums in einen vom abzudichtenden Produkt beaufschlagten Bereich oder eine diesbezügliche Zone, um darin von Zeit zu Zeit eine reinigende Behandlung vornehmen zu können, die für die Aufrechterhaltung der Dichtfunktion wichtig ist. Bei einem Einsatz einer gattungsgmässen Gleitring-Dichtungsanordnung als Rührwerksdichtung können z.B. Kristallablagerungen an funktionswichtigen Teilen der Gleitring-Dichtungsanordnung auftreten, die deren Beweglichkeit beeinträchtigen können. Bekannt ist es (BURGMANN ABC der Gleitringrichtung, Selbstverlag 1988, S. 202), das Spülmedium der Gleitring-Dichtungsanordnung über Passagen in einem Montageflansch zuführen, der aus Festigkeitgründen aus einem metallischen Material gebildet wurde. Dabei ist es bekannt, dass Metalle bei Berührung mit dem abzudichtenden Produkt häufig zu chemischen Reaktionen führen, die im Produkt schädliche Verunreinigungen bedingen und deshalb bei manchen Anwendungsfällen so gering wie möglich gehalten bzw. vermieden werden müssen. Eine bekannte Massnahme ist, die mit dem Produkt in Berührung kommenden Flächen mit einer Email-Beschichtung zu versehen. Eine derartige Massnahme am Montageflansch verbietet sich jedoch wegen der damit einhergehenden Blockierung der Zuführpassagen für das Spülmedium. In Anbetracht dessen musste bislang u.U. auf eine Spülung der produktbeaufschlagten Bereiche der Gleitring-Dichtungsanordnung verzichtet und deren zeitweilige längerdauernde Stillsetzung wegen Wartungsarbeiten in Kauf genommen werden.

Der Erfindung liegt die Aufgabe zugrunde, eine gattungsgemässe Gleitring-Dichtungsanordnung mit Spülfunktion zum Einsatz bei beliebigen abzudichtenden Produkten zu schaffen.

Diese Aufgabe wird erfindungsgemäss mit den Mitteln des Patentanspruches 1 gelöst. Danach besteht der Montageflansch aus einem Kunststoffmaterial, wobei der Montageflansch mit einer wenigstens in im wesentlichen der Hauptrichtung der wirkenden Montagekräfte wirksamen Verstärkung, wenigstens an lokal begrenzten Bereichen, versehen ist, die dem Montageflansch lokal eine höhere Formbeständigkeit unter den Montagekräften als die des Kunststoffmaterial verleiht. Das dem Montageflansch die gewünschte chemische Beständigkeit bei gleichzeitig inertem chemischen Verhalten gegenüber dem abzudichtenden Produkt verleihende, vorzugsweise faserverstärkte Kunststoffinaterial wird wegen der Verstärkung von den Montagekräften nicht oder nur bis zu einem erlaubten Ausmass beansprucht, so dass eine Blockage der Spülmedium-Zuführpassagen infolge übermässiger Stauchung des Montageflansches nicht zu befürchten ist. Die Spülmedium-Zuführpassagen können daher besonders vorteilhaft, zumindest bereichsweise, mit einem so engen Querschnitt versehen werden, dass sie wie Injektionsdüsen wirken, um das Spülmedium mit kräftigem Strahl gezielt auf bestimmte Bereiche der Gleitring-Dichtungsanordnung zu richten, an denen sich bevorzugt Ablagerungen absetzen. Eine Vielzahl von Kunststoffmaterialien steht für die Bildung des Montageflansches zur Verfügung, um hinsichtlich chemischer Verhaltensweise und Temperaturbeständigkeit optimale Voraussetzungen zu schaffen. Der Kunststoff-Montageflansch, der vorzugsweise zweiteilig ausgebildet ist und Träger eines der Gleitringe der Gleitring-Dichtungsanordnung sein kann, kann durch spanende Bearbeitung oder bei grösserer Stückzahl auch durch Press- oder Spritzformen preisgünstig gefertigt werden. Bezüglich vorteilhafter Weiterbildungen der Erfindung wird auf die Unteransprüche verwiesen.

Die Erfindung wird nachfolgend anhand von Ausführungsbeispielen und der Zeichnung näher erläutert. Es zeigen:
Fig. 1 in längsgeschnittener, teilweise schematisierter Ansicht eine Gleitring-Dichtungsanordnung gemäss einer Ausführungsform der Erfindung,
Fig. 2 ein Detail der Gleitring-Dichtungsanordnung nach Fig. 1 in vergrössertem Massstab, und
Fig. 3 in einer fragmentarischen Ansicht ähnlich Fig. 1 eine Gleitring-Dichtungsanordnung gemäss einer weiteren Ausführungsform der Erfindung

Obschon die Erfindung nachfolgend in Verbindung mit einem Rührwerk zur Abdichtung einer Rührwerkswelle an deren Durchtritt durch eine Behälterwand beschrieben wird, ist die Erfindung auf dieses Einsatzgebiet nicht beschränkt. Sie kann vielmehr vorteilhaft zum Einsatz kommen, wenn dafür Sorge getragen werden soll, dass zwischen einem abzudichtenden flüssigen Produkt und den davon beaufschlagten Teilen der Dichtungsanordnung ein metallischer Kontakt gänzlich oder wenigstens weitestgehend vermieden werden muss.

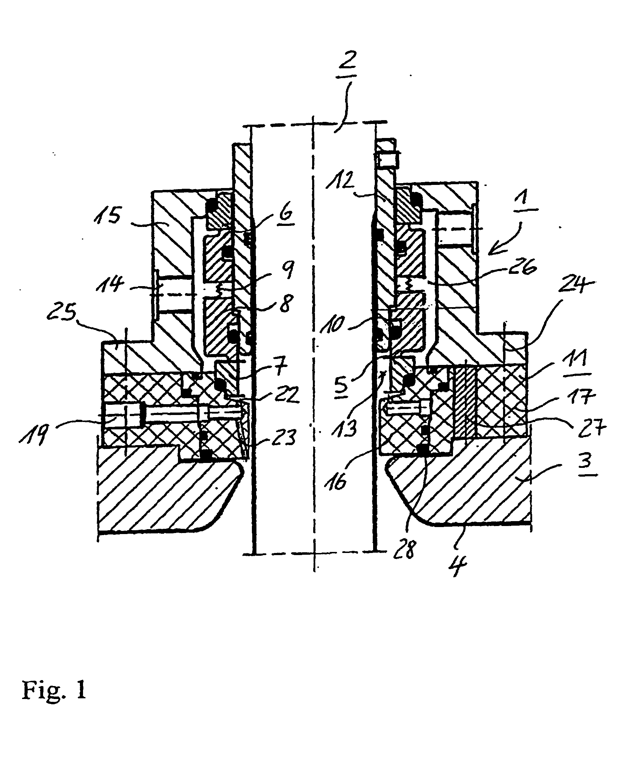

In Fig. 1 trägt die Gleitring-Dichtungsanordnung das allgemeine Bezugszeichen 1, die Rührwerkswelle das Bezugszeichen 2 und ein eine Durchtrittsöffnung für die Rührwerkswelle 2 definierender Montagebereich eines Rührwerkbehälters (nicht gezeigt) das Bezugszeichen 3. Die dem Produkt ausgesetzten Wandbereiche des Montagebereiches 3 können mit einer gegenüber dem Produkt inerten Beschichtung, z.B. Emailschicht, versehen sein.

Die Gleitring-Dichtungsanordnung 1 kann als einfach- oder doppeltwirkende Anordnung ausgebildet sein. Dargestellt ist eine doppeltwirkende Gleitring-Dichtungsanordnung mit einer produktseitigen Gleitringpaarung 5 und einer produktabgewandten Gleitringpaarung 6. Im Zusammenhang mit der vorliegenden Erfindung ist die produktabgewandte Gleitringpaarung 6 von untergeordnetem Interesse und wird daher im Folgenden nicht näher beschrieben.

Die produktseitige Gleitringpaarung 5 umfasst einen auf einer Wellenbuchse 12 zur gemeinsamen Drehung aufgesetzten Gleitring 8. Die Buchse 12 selbst ist drehfest auf der Rührwerkswelle 7 montiert. Der rotierende Gleitring 8 ist mittels einer Vorspanneinrichtung 9 axial gegen einen stationären Gleitring 7 der Gleitringpaarung 5 vorgespannt und zu diesem Zweck axial beweglich auf der Wellenbuchse 12 angeordnet. Die Vorspanneinrichtung 9 kann in Gestalt von mehreren umfänglich verteilt angeordneten Vorspannfedern ausgebildet sein, die, wie dargestellt, zwischen den einander benachbarten rotierenden Gleitringen der produktseitigen und produktabgewandten Gleitringpaarungen 5, 6 angeordnet sein können. Eine Sekundärdichtung 10, die vorzugweise in Gestalt eines O-Ringes ausgebildet ist, ist zwischen der äusseren Umfangsfläche der Wellenbuchse 12 und der inneren Umfangsfläche des Gleitringes 8 vorgesehen, um diese Umfangsflächen, die relativ zueinander beweglich sind, gegeneinander abzudichten. Für die Funktion der Vorspanneinrichtung 9 und der Sekundärdichtung 10 ist es wichtig, dass die axiale Beweglichkeit zwischen den genannten Umfangsflächen aufrechterhalten bleibt und nicht durch Ablagerungen, z.B. kristalline Ausfällungen des abzudichtenden Produktes beeinträchtigt wird.

Der stationäre Gleitring 7 der produktseitigen Gleitringpaarung 5 ist an einem Montageflansch 11 montiert und wirkt mit dem rotierenden Gleitring 8 zusammen, um einen vom Produkt beaufschlagten aufstromseitigen Bereich 13 der Gleitring-Dichtungsanordnung gegenüber einem abstromseitigen Bereich 26 abzudichten. In letzteren kann über eine Einspeisung 14 in einem Dichtungsgehäuse 15 ein inertes Sperrdruckmedium eingeführten werden, das eine Sperrdruckvorlage schafft. Bezüglich weiterer Details von sperrdruckbeaufschlagten, doppelwirkenden Gleitring-Dichtungsanordnungen kann auf BURGMANN ABC der Gleitringrichtung, a.a.O., S. 224 ff verwiesen werden.

Die Gleitringe 7, 8 der produktseitigen Gleitringpaarung 5 können aus gegenüber dem abzudichtenden Produkt inerten Werkstoffen bestehen. Geeignete Gleitringwerkstoffpaarungen, die diese Forderung erfüllen, sind ebenfalls BURGMANN ABC der Gleitringdichtung a.a.O. S. 103 zu entnehmen.

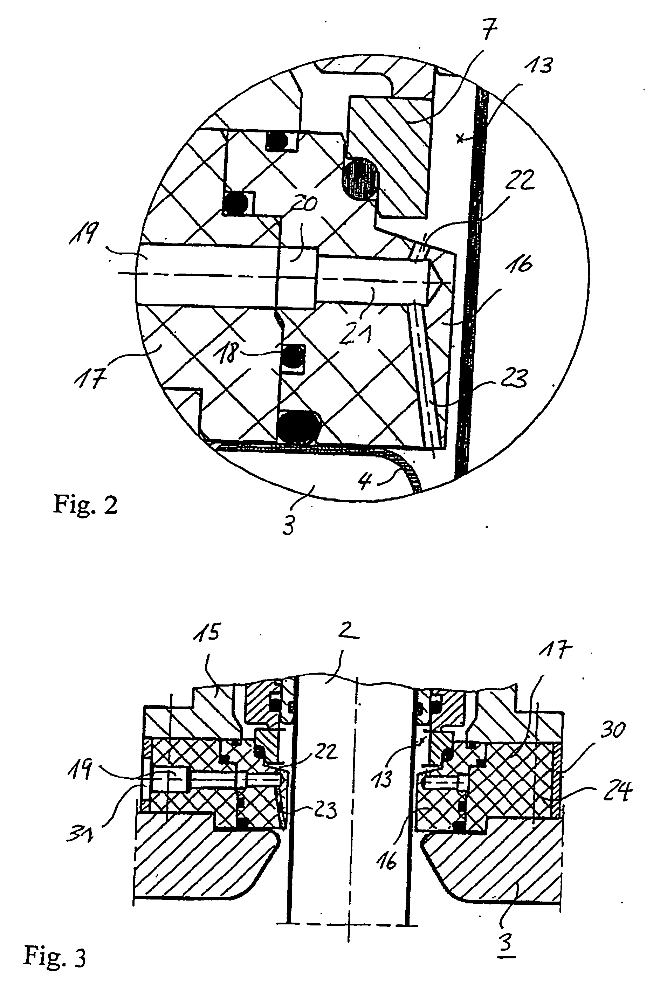

Der Montageflansch 11 besteht erfindungsgemäss aus einem Kunststoffmaterial. Er ist ausserdem vorzugsweise zweiteilig ausgebildet, indem er einen inneren, der Welle 2 zugewandten Flanschteil 16 und einen äusseren Flanschteil 17 umfasst, der auf dem äusseren Umfang des inneren Flanschteiles 16 in geeigneter Weise aufgesetzt und dagegen abgedichtet ist. Die Abdichtung erfolgt vorzugsweise mittels zwischen den zugewandten Umfangsflächen der inneren und äusseren Flanschteile 16, 17 angeordneter O-Ringe 18, wie dies in Fig. 2 gezeigt ist.

Der stationäre Gleitring 7 kann, wie gezeigt ist, am inneren Flanschteil 16 montiert sein.

Miteinander in Fluidverbindung stehende Zuführpassagen 19-22 sind in den Flanschteilen 16, 17 vorgesehen, um ein Spülmedium von einer Stelle aufstromseitig des stationären Gleitringes 7 in den vom abzudichtenden Produkt beaufschlagten Bereich 13 einzuführen. Insbesondere umfassen die Zuführpassagen eine den äusseren Flanschteil 17 radial durchsetzende Passage 19 mit Mitteln an ihrem am äusseren Umfang des äusseren Flanschteiles 17 ausmündenden Endabschnitt zum Anschluss eines Spülflüssigkeit-Versorgungssystems (nicht gezeigt) und einen Ringkanal 20, der im äusseren Umfang des inneren Flanschteiles 16, ausgerichtet zur Passage 19 vorgesehen ist. Eine geeignete Anzahl umfänglich verteilt angeordneter, den inneren Flanschteil 16 radial durchsetzender Passagen 21 ist vorgesehen, die mit dem Ringkanal 20 in Verbindung stehen, um die Spülflüssigkeit einer Vielzahl von ersten und zweiten Spüldüsen 22, 23 zuzuführen, die von der Passage 21 im Wesentlichen radial abzweigen und an entgegengesetzt gerichteten Oberflächen des inneren Flanschteiles 16 des Montageflansches 11 ausmünden. Insbesondere münden die ersten Spüldüsen 22 aufstromseitig des stationären Gleitgringes 7 in den produktbeaufschlagten Bereich 13, um darin die Spülflüssigkeit einzuführen, so dass die produktbeaufschlagten Flächen der Gleitringpaarung 5 und der Wellenbuchse 12 von der Spülflüsigkeit beaufschlagt werden können, um daran sich gegebenenfalls abgesetzte Ablagerungen zu entfernen. Die zweiten Spüldüsen 23 münden am inneren Flanschteil 16 nahe dem Montagebereich 3 aus und können unerwünschte Ablagerungen an den betreffenden benachbarten Bereiche beseitigen. Obschon das Vorsehen der zweiten Spüldüsen 23 vorteilhaft ist, könnten diese, wenn erwünscht, auch weggelassen werden.

Obschon verschiedene Kunststoffmaterialien, die aufgrund ihrer mechanischen Eigenschaften und chemischen Beständigkeit geeignet sind, für den Montageflansch 11 verwendet werden können, werden bevorzugt solche aus der Gruppe der Polyolefine vorgesehen. Ein besonders bevorzugtes Kunststoffmaterial ist Polytetrafluorethylen (PTFE) aufgrund seiner guten mechanischen Eigenschaften und thermischen sowie chemischen Beständigkeit. Andere geeignete Kunststoffmaterialien sind: Perfluoralkoxy-Polymere (PFA), Polyoxymethylen (POM), Polystyrol (PS).

Für manche Anwendungsfälle reicht die Festigkeit des Kunststoffbasismaterials für die Bildung des Montageflansches 11 aus. Vorzugsweise wird jedoch die Festigkeit durch Hinzufügung einer Faserverstärkung erhöht. Bevorzugte Faserverstärkungsmaterialien sind Glas- oder Kohlenstofffasern mit einem Anteil zwischen 5 und 35 Vol.%, vorzugsweise 25 Vol.% des Kunststoffbasismaterials.

Der Montageflansch 11 mit den Flanschteilen 16, 17 und den darin vorgesehenen Passagen 19-23 für die Spülflüssigkeit könnte nach dem bekannten Kunststoff-Spritzgiessverfahren hergestellt werden. Bei kleineren Stückzahlen wird jedoch eine Herstellung durch spanende Bearbeitung bevorzugt.

Wie in Fig. 1 bei 24 angedeutet ist, ist der Montageflansch 11, insbesondere dessen äusserer Flanschteil 17, zwischen einem flanschförmigen Bereich 25 des Dichtungsgehäuses 15 und dem Montagebereich 3 mittels Schrauben montiert. Infolge davon wird der Montageflansch 11 mit axial gerichteten Montagekräften beaufschlagt. Die Montagekräfte können eine übermässige Stauchung des Montageflansches 11 bewirken und dadurch nicht nur die fluiddichte Verbindung zwischen dem inneren und äusseren Flanschteil 16, 17 beeinträchtigen, sondern diese Kräfte könnten auch zu einer Einschränkung oder Behinderung des Durchsatzes an Spülflüssigkeit durch die Passagen 19-23 führen.

Erfindungsgemäss ist eine Verstärkung in Richtung der wirkenden Montagekräfte im Montageflansch 1 vorgesehen, über die die Montagekräfte bevorzugt übertragen werden. Die Verstärkung kann in Form eines erhöhten Anteiles an Verstärkungsfasern längs eines Bereiches des Montageflansches 11 gebildet sein, durch den die Montageschrauben 24 hindurchgeführt sind. Eine bevorzugte Ausbildung der Verstärkung ist in Gestalt einer Vielzahl von den Montageflansch 11, insbesondere dessen äusseren Flanschteil 17, nahe den Montageschrauben 24 axial durchsetzenden Stiftelementen 27 aus einem metallischen Material, wie einem Stahlmaterial. Drei oder mehrere Stiftelemente 27 können umfänglich verteilt vorgesehen sein. Die Stiftelemente 27 können, wenn erwünscht, auch aus anderen Materialien mit höherer Formbeständigkeit unter den darauf einwirkenden Montagekräften als die des Kunststoffmaterials gebildet sein. Die Stiftelemente 27 haben vorzugsweise eine etwas geringere axiale Abmessung als die des Montageflansches 11 an der Stelle, an der die Stiftelemente 27 vorgesehen sind, so dass der Montageflansch 11 beim Anziehen der Montageschrauben 24 zunächst um ein gewisses geringes Mass gestaucht bzw. zusammengedrückt wird, bevor die Montagekräfte über die Stiftelemente 27 auf das Dichtungsgehäuse 15 übertragen werden. Hierdurch wird eine feste Anlage des Montageflansches 11 am Flanschbereich 25 des Dichtungsgehäuses 15 und dem Montagebereich 3 gewährleistet, ohne dass der Montageflansch 11 unzulässig hohe Stauchungen erfährt. Insbesondere gewährleistet dies eine wirksame Abdichtung zwischen den angrenzenden Stirnflächen des Montageflansches 11 und des Montagebereiches 3, wie dies bei 28 angedeutet ist.

Fig. 3 zeigt eine Modifikation der vorbeschriebenen Ausführung des Montageflansches, indem um den äusseren Umfang des äusseren Flanschteiles 17 ein Verstärkungsring 30 aus einem metallischen Material, wie Stahlmaterial, gelegt ist. Die Wirkung des Ringes 30 entspricht derjenigen der Stiftelemente 27 der in Fig. 1 gezeigten Ausführungsform. Im Übrigen entspricht die Ausführungsform nach Fig. 3 derjenigen nach Fig. 1, so dass bezüglich der übrigen Aufbauteile hierauf verwiesen werden kann. Darauf hinzuweisen ist, dass der Verstärkungsring 30 im Bereich der Passage 19 für die Spülflüssigkeit eine Durchlassöffnung 31 aufweist.

Obschon die Erfindung vorausgehend anhand von Ausführungsformen beschrieben wurde, bei denen die Spülflüssigkeit aufstromseitig des stationären Gleitrings 7 der produktseitigen Gleitringpaarung 5 ausgestossen wird, könnte die Einführung auch über eine Passage erfolgen, die durch den stationären Gleitring geführt ist. Auch könnte der Spülvorgang in Kombination mit einer vorübergehenden Abdichtung des produktbeaufschlagten Bereiches 13 gegenüber der Produktseite mittels einer Stillstandsdichtung erfolgen, wie sie in BURGMANN ABC der Gleitringdichtung a.a.O. S. 202 gezeigt ist. In diesem Fall könnte ggf. auf ein gerichtetes Abstrahlen der Spülflüssigkeit mittels der Spüldüsen 22, 23 verzichtet und die Spülflüssigkeit über die radialen Passagen 21 eingeführt werden. Schliesslich könnte die translatorische Beweglichkeit statt am rotierenden am nicht drehenden Gleitring unter entsprechender Ausrichtung der Spüldüsen vorgesehen sein.

## Patentansprüche

1. Gleitring-Dichtungsanordnung mit wenigstens einem Paar zusammenwirkender Gleitringe (7,8), von denen einer drehfest zur Montage an einem stationären Bauteil und der andere rotierend zur gemeinsamen Drehung mit einem rotierenden Bauteil vorgesehen und von denen einer in Richtung des anderen translatorisch beweglich ist, wobei zwischen dem translatorisch beweglichen Gleitring und dem betreffenden Bauteil eine Sekundärdichtung (10) vorgesehen ist, und mit einer Einrichtung zur Zufuhr einer Spülflüssigkeit in einen vom abzudichtenden Medium (Produkt) beaufschlagbaren, die Sekundärdichtung umfassenden Bereich (13) der Dichtungsanordnung, wobei die Zuführeinrichtung in einem produktseitig angeordneten Montageflansch (11) der Dichtungsanordnung vorgesehene Zuführpassagen (19-23) für die Spülflüssigkeit umfasst, **dadurch gekennzeichnet, dass** der Montageflansch (11) aus einem Kunststoffmaterial mit einer wenigstens in im Wesentlichen der Hauptrichtung von auf den Montageflansch wirkenden Montagekräften wirksamen, wenigstens an lokal begrenzten Bereichen des Montageflansches vorgesehenen Verstärkung (27,30) mit höherer Formbeständigkeit unter den Montagekräften als die des Kunststoffmaterials gebildet ist.

2. Gleitring-Dichtungsanordnung nach Anspruch 1, **dadurch gekennzeichnet, dass** das Kunststoffmaterial faserverstärkt ist.

3. Gleitring-Dichtungsanordnung nach Anspruch 1 oder 2, **dadurch gekennzeichnet, dass** die Verstärkung eine Verstärkungseinlage (27,30) aus einem metallischen Material umfasst.

4. Gleitring-Dichtungsanordnung nach Anspruch 3, **dadurch gekennzeichnet, dass** die Verstärkungseinlage eine Vielzahl von umfänglich verteilt angeordneten, im Kunststoffmaterial des Montageflansches (11) vorgesehenen Stiftelementen (27) umfasst.

5. Gleitring-Dichtungsanordnung nach einem der vorhergehenden Ansprüche, **dadurch gekennzeichnet, dass** der Montageflansch (11) innere und äussere Flanschteile (16,17) umfasst, wobei die Verstärkung (27,30) am äusseren Flanschteil vorgesehen ist.

6. Gleitring-Dichtungsanordnung nach Anspruch 5, **dadurch gekennzeichnet, dass** der innere Flanschteil (16) eine Vielzahl von von einer Hauptzuführpassage (19,20,21) abzweigenden Spüldüsen (22,23) zum gerichteten Einspritzen des Spülmediums in ausgewählte Bereiche des vom abzudichtenden Medium beaufschlagbaren Bereiches (13) der Dichtungsanordnung enthält.

7. Gleitring-Dichtungsanordnung nach Anspruch 5 oder 6, **dadurch gekennzeichnet, dass** der drehfeste Gleitring (7) am inneren Flanschteil (16) des Montageflansches (11) montiert ist.

8. Gleitring-Dichtungsanordnung nach einem der vorhergehenden Ansprüche, **dadurch gekennzeichnet, dass** das Kunststoffmaterial des Montageflansches (11) einen Verstärkungsfaseranteil zwischen 15 und 35 Volumenprozent, vorzugsweise 25 Volumenprozent, umfasst.

9. Gleitring-Dichtungsanordnung nach Anspruch 8, **dadurch gekennzeichnet, dass** Glasfasern als Verstärkungsfasern vorgesehen sind.

## Claims

1. A face seal assembly including at least one pair of co-operating seal rings (7, 8) of which one is provided for non-rotational mounting on a stationary component and the other for rotation in common with a rotary component and of which one is moveable towards the other in translatory manner, a secondary seal (10) provided between the translatory moveable seal ring and the associated component, and means for supplying a flushing liquid to a region (13) of the seal assembly exposed to the medium (product) to be sealed and encompassing said secondary seal, said supplying means comprising supplying passages (19-23) for the flushing liquid provided on a mounting flange (11) of the seal assembly disposed at the product side thereof, **characterized in that** the mounting flange (11) is formed of a plastic material having a reinforcement (27,30) having a higher resistance to deformation by the mounting forces than that of the plastic material and provided on at least locally limited portions of the mounting flange, said reinforcement being effective at least essentially in the main direction of the mounting forces acting in the mounting flange.

2. The face seal assembly according to claim 1, **characterized in that** the plastic material is fibre-reinforced.

3. The ace seal assembly according to claim 1 or 2, **characterized in that** the reinforcement comprises a reinforcing insert (27,30) made of a metallic material.

4. The face seal assembly according to claim 3, **characterized in that** the reinforcing insert comprises a plurality of peripherally distributed pin elements (27) provided in the plastic material of the mounting flange (11).

5. The face seal assembly according to anyone of the preceding claims, **characterized in that** the mounting flange (11) comprises inner and outer flange portions (16,17) whereby the reinforcement (27,30) is provided on the outer flange portion.

6. The face seal assembly according to claim 5, **characterized in that** said inner flange portion (16) includes a plurality of flushing nozzles (22,23) branching off a main supplying passage (19,20,21) for injecting the flushing medium in directional manner into selected areas of the region (13) of the seal assembly which are exposable to the medium to be sealed.

7. The face seal assembly according to claim 5 or 6, **characterized in that** the non-rotational seal ring (7) is mounted on the inner flange part (16) of the mounting flange (11).

8. The face seal assembly according to anyone of the preceding claims, **characterized in that** the plastic material of the mounting flange (11) comprises a rate of fibre reinforcement of between 15 and 35 percent by volume, preferably 25 percent by volume.

9. The face seal assembly according to claim 8, **characterized in that** the reinforcing fibres are in the form of glass fibres.

## Revendications

1. Dispositif d'étanchéité à bague glissante pourvu d'au moins une paire de bagues glissantes (7, 8) coopérant ensemble, dont l'une est prévue de manière à ne pas tourner au montage sur un élément stationnaire et l'autre est prévue de façon à pouvoir tourner dans une rotation commune avec un élément rotatif et dont l'une peut être déplacée en translation en direction de l'autre, un joint d'étanchéité secondaire (10) étant prévu entre la bague glissante déplaçable en translation et l'élément en question, et pourvu d'un dispositif d'alimentation en liquide de rinçage d'une zone (13) du dispositif d'étanchéité comprenant le joint d'étanchéité secondaire pouvant être chargée par le moyen d'étanchéification (produit), le dispositif d'alimentation comprenant dans une bride de montage (11) disposée du côté du produit du dispositif d'étanchéité des passages d'alimentation (19-23) prévus pour le liquide de rinçage, **caractérisé en ce que** la bride de montage (11) est réalisée en matériau plastique avec un renforcement (27, 30) prévu au moins sur des zones localement limitées de la bride de montage, efficace essentiellement dans la direction principale des forces de montage agissant sur la bride de montage présentant une indéformabilité supérieure aux forces de montage à celle du matériau plastique.

2. Dispositif d'étanchéité à bague glissante selon la revendication 1, **caractérisé en ce que** le matériau plastique est renforcé par des fibres.

3. Dispositif d'étanchéité à bague glissante selon la revendication 1 ou 2, **caractérisé en ce que** le renforcement comprend un insert de renforcement (27, 30) en matériau métallique.

4. Dispositif d'étanchéité à bague glissante selon la revendication 3, **caractérisé en ce que** l'insert de renforcement comprend une pluralité d'éléments de tige (27) prévus dans le matériau plastique de la bride de montage (11) disposés uniformément à la périphérie.

5. Dispositif d'étanchéité à bague glissante selon l'une quelconque des revendications précédentes, **caractérisé en ce que** la bride de montage (11) comprend des parties de bride (16, 17) internes et externes, le renforcement (27, 30) étant prévu sur la partie de bride externe.

6. Dispositif d'étanchéité à bague glissante selon la revendication 5, **caractérisé en ce que** la partie de bride interne (16) contient une pluralité de buses de rinçage (22, 23) bifurquant d'un passage principal d'alimentation (19, 20, 21) pour l'injection dirigée du moyen de rinçage dans des zones choisies de la zone (13) pouvant être alimentée par le moyen d'étanchéification du dispositif d'étanchéité.

7. Dispositif d'étanchéité à bague glissante selon la revendication 5 ou 6, **caractérisé en ce que** la bague glissante ne pouvant pas tourner (7) est montée sur la partie de bride interne (16) de la bride de montage (11).

8. Dispositif d'étanchéité à bague glissante selon l'une quelconque des revendications précédentes, **caractérisé en ce que** le matériau plastique de la bride de montage (11) comprend une proportion de fibres de renforcement comprise entre 15 et 35% par volume, de préférence 25% par volume.

9. Dispositif d'étanchéité à bague glissante selon la revendication 8, **caractérisé en ce que** des fibres de verre sont prévues comme fibres de renforcement.
